# EUROPEAN PATENT SPECIFICATION

(11) **EP 4 405 300 B1**
(45) Date of publication and mention of the grant of the patent: **01.10.2025**
(21) Application number: 22772760.9
(22) Date of filing: 26.08.2022
(51) Int. Cl.: C01B 39/48, B01J 29/70, B01J 35/61, B01J 35/70

(54) **EMM-63 ALUMINOSILICATE ZEOLITES, SYNTHESES, AND USES**
EMM-63-ALUMINIUMSILIKAT-ZEOLITHE, SYNTHESEN UND VERWENDUNGEN
ZÉOLITES D'ALUMINOSILICATE EMM-63, SYNTHÈSES ET UTILISATIONS

(30) Priority: 22.09.2021 US 202163261474 P
(43) Date of publication of application: 31.07.2024
(73) Proprietor: ExxonMobil Technology and Engineering Company, Annandale, NJ 08801-0900 (US)
(72) Inventor: BURTON, Allen, W., Stewartsville, NJ 08886 (US); VROMAN, Hilda, B., Piscataway, NJ 08854 (US)
(74) Representative: ExxonMobil Petroleum & Chemical BV
(86) International application number: PCT/US2022/075486
(87) International publication number: WO 2023/049598

(56) References cited:
- US-A- 4 578 259
- US-A1- 2008 107 594
- XU HAO ET AL: "Efficient synthesis of aluminosilicate RTH zeolite with good catalytic performances in NH 3 -SCR and MTO reactions", JOURNAL OF MATERIALS CHEMISTRY A, vol. 6, no. 18, 1 January 2018 (2018-01-01), GB, pages 8705 - 8711, XP055957573, ISSN: 2050-7488, Retrieved from the Internet <URL:https://pubs.rsc.org/en/content/articlepdf/2018/ta/c8ta01734d> DOI: 10.1039/C8TA01734D

## Description

### TECHNICAL FIELD

The present disclosure relates to aluminosilicate zeolites, designated as EMM-63, methods of making the same, and uses thereof.

### BACKGROUND OF THE INVENTION

Molecular sieve materials, both natural and synthetic, may be used as adsorbents and have catalytic properties for hydrocarbon conversion reactions. Certain molecular sieves, such as zeolites, AlPOs, and mesoporous materials, are ordered, porous crystalline materials having a definite crystalline structure as determined by X-ray diffraction (XRD). Certain molecular sieves are ordered and produce specific identifiable XRD patterns. Within certain molecular sieve materials there may be a large number of cavities, which may be interconnected by a number of channels or pores. These cavities and pores are uniform in size within a specific molecular sieve material. Because the dimensions of these pores are such as to accept for adsorption molecules of certain dimensions while rejecting those of larger dimensions, these materials have come to be known as "molecular sieves" and are utilized in a variety of industrial processes, e.g. cracking, hydrocracking, disproportionation, alkylation, oligomerization, and isomerization.

Molecular sieves that find application in catalysis and adsorption include any of the naturally occurring or synthetic crystalline molecular sieves. Examples of these molecular sieves include large pore zeolites, intermediate pore size zeolites, and small pore zeolites. These zeolites and their isotypes are classified by the Structure Commission of the International Zeolite Association according to the rules of the IUPAC Commission on Zeolite Nomenclature. According to this classification, framework type zeolites and other crystalline microporous molecular sieves, for which a structure has been established, are assigned a three letter code and are described in the "Atlas of Zeolite Framework Types", eds. Ch. Baerlocher, L.B. et al., Elsevier, Sixth Edition, 2007. These zeolites and their isotypes are also described in "the Database of Zeolite Structures of the IZA Structure Commission". A large pore zeolite generally has a pore size of at least about 7 Å and includes LTL, VFI ("extra-large" 18R), MAZ, FAU, OFF, *BEA, and MOR framework type zeolites. Examples of large (or extra-large) pore zeolites include mazzite, offretite, zeolite L, VPI-5, zeolite Y, zeolite X, omega, and Beta. An intermediate pore size zeolite generally has a pore size from about 5 Å to less than about 7 Å and includes, for example, MFI, MEL, EUO, MTT, MFS, AEL, AFO, HEU, FER, MWW, and TON framework type zeolites. Examples of intermediate pore size zeolites include ZSM-5, ZSM-11, ZSM-22, MCM-22, silicalite 1, and silicalite 2. A small pore size zeolite has a pore size from about 3 Å to less than about 5.0 Å and includes, for example, CHA, RTH, ERI, KFI, LEV, SOD, and LTA framework type zeolites. Examples of small pore zeolites include ZK-4, ZSM-2, SAP0-34, SAP0-35, ZK-14, SAP0-42, ZK-21, ZK-22, ZK-5, ZK-20, zeolite A, chabazite, zeolite T, and ALPO-17.

The idealized inorganic framework structure of zeolites is a framework of silicate in which all tetrahedral atoms are connected by oxygen atoms with the four next-nearest tetrahedral atoms. The term "silicate", as used herein, refers to a substance containing at least silicon and oxygen atoms that are alternately bonded to each other (i.e., -O-Si-O-Si-), and optionally including other atoms within the inorganic framework structure, including atoms such as boron, aluminum, or other metals (e.g., transition metals, such as titanium, vanadium, or zinc). Atoms other than silicon and oxygen in the framework silicate occupy a portion of the lattice sites otherwise occupied by silicon atoms in an 'all-silica' framework silicate. Thus, the term "framework silicate" as used herein refers to an atomic lattice comprising any of a silicate, borosilicate, gallosilicate, ferrisilicate, aluminosilicate, titanosilicate, zincosilicate, vanadosilicate, or the like.

The structure of the framework silicate within a given zeolite determines the size of the pores or channels that are present therein. The pore or channel size may determine the types of processes for which a given zeolite is applicable. Currently, greater than 200 unique zeolite framework silicate structures are known and recognized by the Structure Commission of the International Zeolite Association, thereby defining a range of pore geometries and orientations.

The framework silicates of zeolites are commonly characterized in terms of their ring size, wherein the ring size refers to the number of silicon atoms (or alternative atoms, such as those listed above) that are tetrahedrally coordinated with oxygen atoms in a loop to define a pore or channel within the interior of the zeolite. For example, an "8-ring" zeolite refers to a zeolite having pores or channels defined by 8 alternating tetrahedral atoms and 8 oxygen atoms in a loop. The pores or channels defined within a given zeolite may be symmetrical or asymmetrical depending upon various structural constrains that are present in the particular framework silicate.

Synthesis of molecular sieve materials typically involves hydrothermal crystallization from a synthesis mixture comprising sources of all the elements present in the zeolite such as sources of silica but also of alumina etc. In many cases a structure directing agent (SDA) is also present. Structure directing agents are compounds which are believed to promote the formation of molecular sieves and which are thought to act as templates around which certain molecular sieve structures can form and which thereby promote the formation of the desired molecular sieve. Various compounds have been used as structure directing agents including various types of quaternary ammonium cations. Typically, zeolite crystals form around structure directing agents with the structure directing agent occupying pores in the zeolite once crystallization is complete. The "as-synthesized" zeolite will therefore contain the structure directing agent in its pores so that, following crystallization, the "as-synthesized" zeolite is usually subjected to a treatment step such as a calcination step to remove the structure directing agent.

Although many different zeolites have been discovered, there is a continuing need for new zeolites with desirable properties for gas separation and drying, organic conversion reactions, and other applications. New zeolites can contain novel internal pore architectures, providing enhanced selectivities in these processes.

### SUMMARY

The present disclosure relates to aluminosilicate zeolites, methods of making the same, and uses thereof.

In a first embodiment, the present disclosure relates to an aluminosilicate zeolite, designated as EMM-63, having, in its as-calcined form (e.g., where at least part of the SDA has been removed), an X-ray diffraction pattern including at least 10, or 12, or 14, or 16, or preferably all of the peaks in degree 2-theta selected from Table 1:

**Table 1**

| **degree 2-theta (±0.20)** | **relative intensity [100 x I/(Io)]** |
|---|---|
| 7.27 | 20-40 |
| 7.88 | 60-100 |
| 8.27 | 10-30 |
| 11.85 | 20-40 |
| 14.48 | 10-30 |
| 15.84 | 30-60 |
| 15.99 | 20-40 |
| 16.60 | 30-60 |
| 18.83 | 20-40 |
| 22.31 | 20-40 |
| 23.37 | 20-40 |
| 23.83 | 40-70 |
| 24.30 | 20-40 |
| 25.02 | 40-70 |
| 25.27 | 40-70 |
| 27.72 | 10-30 |
| 28.06 | 40-70 |
| 30.57 | 10-30 |
| 32.07 | 10-30 |

In a second embodiment, the present disclosure relates to an aluminosilicate zeolite, designated as EMM-63, having, in its as-synthesized form (e.g., where the SDA has not been removed), an X-ray diffraction pattern including at least 10, or 12, or 14, or preferably all of the peaks in degree 2-theta selected from Table 2:

**Table 2**

| **Degree 2-theta (±0.20)** | **Relative intensity [100 x I/(Io)]** |
|---|---|
| 7.30 | 10-30 |
| 7.90 | 80-100 |
| 8.30 | 20-40 |
| 15.84 | 20-40 |
| 16.04 | 20-40 |
| 16.64 | 20-40 |
| 18.87 | 10-30 |
| 22.35 | 20-40 |
| 23.41 | 20-40 |
| 23.85 | 50-70 |
| 24.32 | 10-30 |
| 25.07 | 30-60 |
| 25.29 | 30-60 |
| 27.74 | 10-30 |
| 28.08 | 30-60 |
| 30.57 | 10-30 |
| 32.11 | 10-30 |

In a third embodiment, the present disclosure relates to an aluminosilicate zeolite having (whether in as-synthesized, as-treated (e.g., with acid or acid and steam) and/or as-calcined form), a structure that has (a) an orthorhombic space group *Pmma* with unit cell dimensions a = 22.1 ± 0.20 Å, b = 7.4 ± 0.20 Å, and c = 11.8 ± 0.20 Å, and (b) a 10 x 8 x 8 channel system, wherein the 10-ring pores along the c-axis have dimensions of 5.2 ± 0.20 Å by 4.9 ± 0.20 Å, the 8-ring pores along the c-axis have dimensions of 4.7 ± 0.20 Å by 3.1 ± 0.20 Å, and a separate 8-ring pore within the x-z plane has dimensions of 4.7 ± 0.20 Å by 3.1 ± 0.20 Å.

In a fourth embodiment, the present disclosure relates to an aluminosilicate zeolite having (whether in as-synthesized, as-treated (e.g., with acid or acid and steam) and/or as-calcined form), a framework defined by the connectivities in Table 3 for the tetrahedral (T) atoms in the unit cell, where the tetrahedral (T) atoms are connected by bridging atoms.

**Table 3**

| **Topol. equiv. T-atom^{a}** | **Coordination Sequence N₁ to N₁₂** | | | | | | | | | | | |
|---|---|---|---|---|---|---|---|---|---|---|---|---|
| T1 | 4 | 10 | 20 | 36 | 59 | 84 | 110 | 138 | 180 | 234 | 283 | 327 |
| T2 | 4 | 9 | 18 | 35 | 60 | 87 | 111 | 137 | 176 | 230 | 288 | 337 |
| T3 | 4 | 10 | 20 | 34 | 56 | 84 | 110 | 137 | 173 | 226 | 288 | 338 |
| T4 | 4 | 12 | 23 | 38 | 54 | 78 | 111 | 156 | 196 | 222 | 267 | 318 |
| T5 | 4 | 12 | 24 | 38 | 52 | 76 | 115 | 154 | 192 | 223 | 256 | 323 |
| T6 | 4 | 10 | 21 | 36 | 56 | 80 | 109 | 146 | 180 | 217 | 272 | 331 |

| | | | | | | | | | | | | |
|---|---|---|---|---|---|---|---|---|---|---|---|---|
| ^{a} Topologically equivalent atom positions have the same "T-type" symbol. ^{b} Size and number of smallest ring on each angle of the T-atom (M. O'Keeffe et al., Zeolites, v.19, pg. 370 (1997)). | | | | | | | | | | | | |

In a fifth embodiment, the present disclosure relates to a method of making an aluminosilicate zeolite, comprising the following steps: (a) preparing a synthesis mixture comprising water, a source of silica, a source of alumina, a source of potassium, a source of hydroxide ions (OH), and a structure directing agent (Q) selected from the group consisting of N,2,3,5-tetramethylpyridinium, N,2,4,6-tetramethylpyridinium, and mixtures thereof; 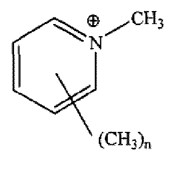 (b) heating said synthesis mixture under crystallization conditions including a temperature of from 100°C to 200°C for a time sufficient to form crystals of said aluminosilicate zeolite; (c) recovering at least a portion of the aluminosilicate zeolite from step (b); and (d) optionally treating the aluminosilicate zeolite recovered in step (c) to remove at least part of the structure directing agent (Q).

In a sixth embodiment, the present disclosure relates to a process of converting an organic compound to a conversion product, which comprises contacting the organic compound with the aluminosilicate zeolite according to the first, second, third or fourth embodiment, or prepared according to the process of the fifth embodiment.

These and other features and attributes of the present disclosure and their advantageous applications and/or uses will be apparent from the detailed description which follows. It will of course be appreciated that features described in relation to one aspect of the present invention may be incorporated into other aspects of the present invention. In particular, any two or more of the features described in this specification, including in this summary section, can be combined to form combinations of features not specifically described herein.

### DESCRIPTION OF THE DRAWINGS

Figure 1 shows the powder XRD pattern of the as-calcined product of Example 1.
Figure 2 shows SEM images of the as-synthesized product of Example 1.
Figure 3 shows a SEM image of the as-synthesized product of Example 3.
Figure 4 shows SEM images of the as-synthesized product of Example 4.
Figure 5 shows SEM images of the as-synthesized product of Example 5.
Figure 6 shows the powder XRD of the as-calcined products of Examples 2, 4 and 5.
Figure 7 shows the crystal structure of EMM-63 as determined from electron diffraction.
Figure 8 shows the powder XRD patterns of the as-synthesized and as-calcined and ammonium-exchanged versions of the product of Example 7.

### DETAILED DESCRIPTION

The present disclosure relates to aluminosilicate zeolites, methods of making the same, and uses thereof. Said aluminosilicate zeolites may be designated as EMM-63 zeolites or EMM-63 materials.

The "as-synthesized" (or "as-made) aluminosilicate zeolites of the present disclosure (i.e., before thermal treatment or other treatment to remove the SDA from the pores) typically include the SDA, one of the components of the synthesis mixture, within their pores. The aluminosilicate zeolites of the present disclosure where part or all of the structure directing agent (SDA) has been removed (e.g., via thermal treatment or other treatment to remove the SDA from the pores), are at least partially calcined or "as-calcined" materials.

In a first embodiment, the present disclosure relates to an aluminosilicate zeolite having, in its as-calcined form (e.g., where at least part of the SDA has been removed), an X-ray diffraction pattern including at least 10, or 12, or 14, or 16, or preferably all of the peaks in degree 2-theta selected from Table 1:

**Table 1**

| **degree 2-theta (±0.20)** | **relative intensity [100 x I/(Io)]** |
|---|---|
| 7.27 | 20-40 |
| 7.88 | 60-100 |
| 8.27 | 10-30 |
| 11.85 | 20-40 |
| 14.48 | 10-30 |
| 15.84 | 30-60 |
| 15.99 | 20-40 |
| 16.60 | 30-60 |
| 18.83 | 20-40 |
| 22.31 | 20-40 |
| 23.37 | 20-40 |
| 23.83 | 40-70 |
| 24.30 | 20-40 |
| 25.02 | 40-70 |
| 25.27 | 40-70 |
| 27.72 | 10-30 |
| 28.06 | 40-70 |
| 30.57 | 10-30 |
| 32.07 | 10-30 |

In a further embodiment, said aluminosilicate zeolite, in its as-calcined form, may have an X-ray diffraction pattern including at least 10, or 12, or 14, or 16, or preferably all of the peaks with the degree 2-theta and d-spacing values selected from Table 1A, wherein the d-spacing values have a deviation determined based on the corresponding deviation ±0.20 degree 2-theta when converted to the corresponding values for d-spacing using Bragg's law:

**Table 1A**

| **degree 2-theta (±0.20)** | **d-spacing (Å)** | **relative intensity [100 x I/(Io)]** |
|---|---|---|
| 7.27 | 12.15 | 20-40 |
| 7.88 | 11.21 | 60-100 |
| 8.27 | 10.69 | 10-30 |
| 11.85 | 7.47 | 20-40 |
| 14.48 | 6.11 | 10-30 |
| 15.84 | 5.59 | 30-60 |
| 15.99 | 5.54 | 20-40 |
| 16.60 | 5.34 | 30-60 |
| 18.83 | 4.71 | 20-40 |
| 22.31 | 3.98 | 20-40 |
| 23.37 | 3.80 | 20-40 |
| 23.83 | 3.73 | 40-70 |
| 24.30 | 3.66 | 20-40 |
| 25.02 | 3.56 | 40-70 |
| 25.27 | 3.52 | 40-70 |
| 27.72 | 3.22 | 10-30 |
| 28.06 | 3.18 | 40-70 |
| 30.57 | 2.92 | 10-30 |
| 32.07 | 2.79 | 10-30 |

The XRD patterns with the XRD peaks described herein use Cu(K_{α}) radiation.

In one or more further embodiments, said aluminosilicate zeolite, in its as-calcined form, may have a micropore volume of 0.10 to 0.30 cc/g, or from 0.12 to 0.20 cc/g, e.g., 0.16 cc/g.

In one or more further embodiments, said aluminosilicate zeolite, in its as-calcined form, may have a BET surface area of 250 to 700 m²/g, or from 300 to 600 m²/g, such as from 350 to 500 m²/g, e.g., 444 m²/g.

In one or more further embodiments, said aluminosilicate zeolite, in its as-calcined form, may be optionally represented by the molecular formula of Formula I:

(m)Al₂O₃:SiO₂ (Formula I),

wherein 0.05≤m≤0.17. The oxygen atoms in Formula I may be replaced by carbon atoms (e.g., in the form of CH₂), which can come from sources of the components used to prepare the as-made aluminosilicate zeolite. The oxygen atoms in Formula I can also be replaced by nitrogen atoms, e.g., after the SDA has been removed. Formula I can represent the framework of a typical aluminosilicate zeolite as defined in the present disclosure, in its as-calcined form, and is not meant to be the sole representation of said aluminosilicate zeolite. Said aluminosilicate zeolite, in its as-calcined form, may contain SDA and/or impurities after appropriate treatments to remove the SDA and impurities, which are not accounted for in Formula I. Further, I does not include the protons and charge compensating ions that may be present in said as-calcined aluminosilicate zeolite.

The variable m represents the molar ratio relationship of Al₂O₃ to SiO₂ in Formula I. For example, when m is 0.05, the molar ratio of SiO₂ to Al₂O₃ is 20 and the molar ratio of Si to Al is 10. m may vary from 0.05 to 0.17, such as at least 0.06 to at most 0.1, such as at most 0.08, e.g. 0.06 or 0.07. The molar ratio of Si to Al may be 3 to 10, such as at least 5, or at least 6, and up to 9, or up to 8, e.g. 7 or 8.

In one or more further embodiments, said aluminosilicate zeolite, in its as-calcined form, may contain potassium ions in a molar ratio of K to Al from 0.5 to 1.0, such as from 0.7 to 0.9.

In a second embodiment, the present disclosure relates to an aluminosilicate zeolite, in particular an aluminosilicate zeolite as defined in the first embodiment, having in its as-synthesized form (e.g., where the SDA has not been removed) an X-ray diffraction pattern including at least 10, or 12, or 14, or preferably all of the peaks in degree 2-theta selected from Table 2:

**Table 2**

| **Degree 2-theta (±0.20)** | **Relative intensity [100 x I/(Io)]** |
|---|---|
| 7.30 | 10-30 |
| 7.90 | 80-100 |
| 8.30 | 20-40 |
| 15.84 | 20-40 |
| 16.04 | 20-40 |
| 16.64 | 20-40 |
| 18.87 | 10-30 |
| 22.35 | 20-40 |
| 23.41 | 20-40 |
| 23.85 | 50-70 |
| 24.32 | 10-30 |
| 25.07 | 30-60 |
| 25.29 | 30-60 |
| 27.74 | 10-30 |
| 28.08 | 30-60 |
| 30.57 | 10-30 |
| 32.11 | 10-30 |

In a further embodiment, said aluminosilicate zeolite, in its as-synthesized form, may have an X-ray diffraction pattern including at least 10, or 12, or 14, or preferably all of the peaks with the degree 2-theta and d-spacing values selected from Table 2A, wherein the d-spacing values have a deviation determined based on the corresponding deviation ±0.20 degree 2-theta when converted to the corresponding values for d-spacing using Bragg's law:

**Table 2A**

| **Degree 2-theta (±0.20)** | **d-spacing (Å)** | **Relative intensity [100 x I/(Io)]** |
|---|---|---|
| 7.30 | 12.10 | 10-30 |
| 7.90 | 11.18 | 80-100 |
| 8.30 | 10.64 | 20-40 |
| 15.84 | 5.59 | 20-40 |
| 16.04 | 5.52 | 20-40 |
| 16.64 | 5.32 | 20-40 |
| 18.87 | 4.70 | 10-30 |
| 22.35 | 3.98 | 20-40 |
| 23.41 | 3.80 | 20-40 |
| 23.85 | 3.73 | 50-70 |
| 24.32 | 3.66 | 10-30 |
| 25.07 | 3.55 | 30-60 |
| 25.29 | 3.52 | 30-60 |
| 27.74 | 3.21 | 10-30 |
| 28.08 | 3.18 | 30-60 |
| 30.57 | 2.92 | 10-30 |
| 32.11 | 2.79 | 10-30 |

The XRD patterns with the XRD peaks described herein use Cu(K_{α}) radiation.

In one or more further embodiments, said aluminosilicate zeolite, in its as-synthesized form, may be optionally represented by the molecular formula of Formula II:

(q)Q:(m)Al₂O₃:SiO₂ (Formula II),

wherein 0≤q≤0.2, 0.05≤m≤0.17, and Q is selected from tetramethylpyridinium cations of Formula III: 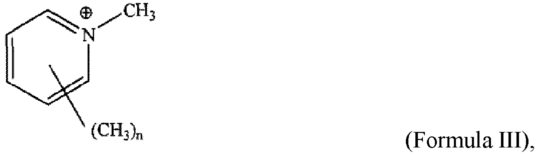 where n is 3, such as from the group consisting of N,2,3,5-tetramethylpyridinium, N,2,4,6-tetramethylpyridinium, and mixtures thereof. Formula II can represent the framework of a typical aluminosilicate zeolite as defined in the present disclosure, in its as-synthesized form, therefore containing structure directing agent (Q), and is not meant to be the sole representation of such material. Said aluminosilicate zeolite, in its as-synthesized form, may contain impurities which are not accounted for in Formula II. Further, Formula II does not include the protons and charge compensating ions that may be present in said as-synthesized aluminosilicate zeolite.

The variable m represents the molar ratio relationship of Al₂O₃ to SiO₂ in Formula II. The values for variable m in Formula II are the same as those described herein for Formula I.

The variable q represents the molar relationship of Q to SiO₂ in Formula II. For example, when q is 0.1, the molar ratio of Q to SiO₂ is 0.1. The molar ratio of Q to SiO₂ may vary from 0 to 0.2, such as from 0.02 to 0.1, e.g. 0.03 to 0.06.

In a third embodiment, the present disclosure relates to an aluminosilicate zeolite, in particular an aluminosilicate zeolite as defined in the first and/or second embodiment, having (whether in as-synthesized, as-treated (e.g., with acid or acid and steam) and/or as-calcined form), a structure that has (a) an orthorhombic space group *Pmma* with unit cell dimensions a = 22.1 ± 0.20 Å, b = 7.4 ± 0.20 Å, and c = 11.8 ± 0.20 Å, and (b) a 10 x 8 x 8 channel system, wherein the 10-ring pores along the c-axis have dimensions of 5.2 ± 0.20 Å by 4.9 ± 0.20 Å, the 8-ring pores along the c-axis have dimensions of 4.7 ± 0.20 Å by 3.1 ± 0.20 Å, and a separate 8-ring pore within the x-z plane has dimensions of 4.7 ± 0.20 Å by 3.1 ± 0.20 Å.

In a fourth embodiment, the present disclosure relates to an aluminosilicate zeolite, in particular an aluminosilicate zeolite as defined in the first, second and/or third embodiment, having (whether in as-synthesized, as-treated (e.g., with acid or acid and steam) and/or as-calcined form), a framework defined by the connectivities in Table 3 for the tetrahedral (T) atoms in the unit cell, where the tetrahedral (T) atoms are connected by bridging atoms.

**Table 3**

| **Topol. equiv. T-atom^{a}** | **Coordination Sequence N₁ to N₁₂** | | | | | | | | | | | |
|---|---|---|---|---|---|---|---|---|---|---|---|---|
| T1 | 4 | 10 | 20 | 36 | 59 | 84 | 110 | 138 | 180 | 234 | 283 | 327 |
| T2 | 4 | 9 | 18 | 35 | 60 | 87 | 111 | 137 | 176 | 230 | 288 | 337 |
| T3 | 4 | 10 | 20 | 34 | 56 | 84 | 110 | 137 | 173 | 226 | 288 | 338 |
| T4 | 4 | 12 | 23 | 38 | 54 | 78 | 111 | 156 | 196 | 222 | 267 | 318 |
| T5 | 4 | 12 | 24 | 38 | 52 | 76 | 115 | 154 | 192 | 223 | 256 | 323 |
| T6 | 4 | 10 | 21 | 36 | 56 | 80 | 109 | 146 | 180 | 217 | 272 | 331 |

| | | | | | | | | | | | | |
|---|---|---|---|---|---|---|---|---|---|---|---|---|
| ^{a} Topologically equivalent atom positions have the same "T-type" symbol. ^{b} Size and number of smallest ring on each angle of the T-atom (M. O'Keeffe et al., Zeolites, v.19, pg. 370 (1997)). | | | | | | | | | | | | |

The connectivities can for instance be determined by using the public-domain software TOTOPOL by M.M.J. Treacy et al., "the Database of Zeolite Structures of the IZA Structure Commission" (see e.g. M.M.J. Treacy, et al. (2004) Microporous and Mesoporous Materials, v.74, pp. 121-132). The tetrahedral atoms may include one or more elements selected from B, Al, Fe, Ga, Si, Ge, Sn, Ti, and Zr, or a mixture thereof. For example, the tetrahedral atoms may be selected from B, Al, or Si, or a mixture thereof. For example, the tetrahedral atoms may comprise or be Si or Al. The bridging atoms may be selected from O, N, and C, or a mixture thereof. The bridging atoms may comprise or be oxygen atoms (e.g., at least 50%, at least 60%, at least 70%, at least 80%, at least 90%, or at least 95% of the bridging atoms may be oxygen). The bridging atom C may be incorporated from the various components used to make the zeolite, e.g., the silica source. The bridging atom N may be incorporated into the zeolite after the SDA has been removed.

The aluminosilicate zeolite as defined in the first, second, third and/or fourth embodiment may have a Si/Al molar ratio of 3 to 10, preferably 5 to 9.

In a fifth embodiment, the present disclosure relates to a method of making an aluminosilicate zeolite, in particular an aluminosilicate zeolite as defined in the first, second, third and/or fourth embodiment, comprising the following steps:
(a) preparing a synthesis mixture comprising water, a source of silica, a source of alumina, a source of potassium (K), a source of hydroxide ions (OH), and a structure directing agent (Q) selected from tetramethylpyridinium cations of Formula III: 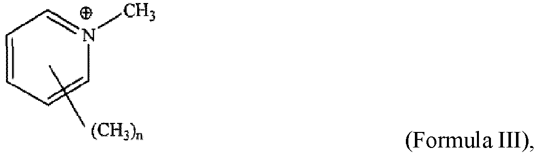 where n is 3;
(b) heating said synthesis mixture under crystallization conditions including a temperature of from 100°C to 200°C for a time sufficient to form crystals of said aluminosilicate zeolite;
(c) recovering at least a portion of the aluminosilicate zeolite from step (b); and
(d) optionally treating the aluminosilicate zeolite recovered in step (c) to remove at least part of the structure directing agent (Q).

The structure directing agent (Q) may be at least one of any tetramethylpyridinium cation as defined by the formula above, e.g., N,2,3,4- or N,2,3,5- or N,2,3,6- etc. tetramethylpyridinium, for instance the structure directing agent (Q) may be selected from the group consisting of N,2,3,5-tetramethylpyridinium, N,2,4,6-tetramethylpyridinium, and mixtures thereof. The structure directing agent (Q) may be present in any suitable form, for example as a halide, such as a chloride or a bromide, as a hydroxide or as a nitrate, for instance in its hydroxide form. The structure directing agent (Q) may be present in the synthesis mixture in a Q/Si molar ratio of 0.05 to 1.0, such as at least 0.1, or at least 0.15, or at least 0.2, up to at most 0.8, or at most 0.7, or at most 0.6, for instance 0.15 to 0.5, e.g., 0.3.

The synthesis mixture comprises at least one source of silica. Suitable sources of silica (e.g., silicon oxide sources) include silicates, e.g., tetraalkyl orthosilicates such as tetramethylorthosilicate (TMOS) and tetraethylorthosilicate (TEOS), fumed silica such as Aerosil^{®} (available from Evonik), Cabosperse^{®} (available from Cabot) and Cabosil^{®} (available from DMS), precipitated silica such as Ultrasil^{®} and Sipernat^{®} 340 (available from Evonik), alkali metal silicates such as potassium silicate and sodium silicate, and aqueous colloidal suspensions of silica, for example, that sold by E.I. du Pont de Nemours under the tradename Ludox^{®} or that sold by Evonik under the tradename Aerodisp^{®}; preferably silicates, fumed silica, precipitated silica, alkali metal silicates, colloidal silica, and in particular aqueous colloidal suspensions of silica.

The synthesis mixture comprises at least one source of alumina. Suitable sources of alumina (e.g., aluminum oxide sources) include aluminum salts, especially water-soluble salts, such as aluminum sulfate, aluminum nitrate, aluminum hydroxide, alkali metal aluminates such as sodium aluminate and potassium aluminate, and aluminum alkoxides such as aluminum isopropoxide, as well as hydrated aluminum oxides, such as boehmite, gibbsite, and pseudoboehmite, and mixtures thereof. Other aluminum sources include, but are not limited to, other water-soluble aluminum salts, sodium aluminate, aluminum alkoxides, such as aluminum isopropoxide, or aluminum metal, such as aluminum in the form of chips. Especially suitable sources of alumina are water-soluble salts, such as aluminum sulfate, aluminum nitrate, aluminum hydroxide, and alkali metal aluminates such as sodium aluminate and potassium aluminate.

Alternatively or in addition to previously mentioned sources of Si and Al, sources containing both Si and Al elements can also be used. Examples of suitable sources containing both Si and Al elements include amorphous silica-alumina gels or dried silica alumina powders, silica aluminas, clays, such as kaolin, metakaolin, and zeolites, in particular aluminosilicates such as synthetic faujasite and ultrastable faujasite, for instance Ultrastable Y (USY), beta or other large to medium pore zeolites.

The synthesis mixture may have a Si/Al molar ratio of from 1 to 50, such as 5 to 25, for instance 5 to 15, e.g., 10.

The synthesis mixture comprises at least one source of potassium (K). Suitable sources of potassium include potassium hydroxide, potassium aluminate, potassium silicate, a potassium salt such as KCl or KBr or potassium nitrate, e.g., potassium hydroxide. The potassium may also be present in the one or more sources of alumina, such as potassium aluminate and/or in the one or more sources of silica, such as potassium silicate . The synthesis mixture may comprise the potassium source in a K/Si molar ratio of 0.05 to 1.0, such as 0.1 to 1.0, for instance 0.15 to 0.5, e.g., 0.3.

The synthesis mixture contains at least one source of hydroxide ions (OH). For example, hydroxide ions can be present as a counter ion of the structure directing agent (Q) and/or of the potassium and/or of optional alkali or alkaline earth metal cation (M) different than potassium, and/or by the use of aluminum hydroxide as a source of Al. Suitable sources of hydroxide ions can also be selected from the group consisting of alkali metal hydroxides, alkaline earth metal hydroxides, ammonium hydroxide, and mixtures thereof; in particular from potassium hydroxide. The synthesis mixture may comprise the hydroxide ions source in a OH/Si molar ratio of from 0.1 to 1.5, such as 0.15 to 1.2 or 0.25 to 0.8, e.g., 0.6.

The synthesis mixture may optionally contain at least one alkali or alkaline earth metal cation (M) different than potassium. If present, M is preferably selected from the group consisting of sodium, lithium, rubidium, calcium, magnesium and mixtures thereof, preferably sodium. The sodium source, when present, may be sodium hydroxide, sodium aluminate, sodium silicate, sodium aluminate or sodium salts such as NaCl, NaBr or sodium nitrate. The lithium source, when present, may be lithium hydroxide or lithium salts such as LiCl, LiBr, LiI, lithium nitrate, or lithium sulfate. The rubidium source, when present, may be rubidium hydroxide or rubidium salts such as RbCl, RbBr, RBI, or rubidium nitrate. The calcium source, when present, may be calcium hydroxide, for example. The magnesium source, when present, may be magnesium hydroxide, for example. The alkali or alkaline earth metal cation M may also be present in the one or more sources of a alumina, such as sodium aluminate, and/or in the one or more sources of silica, such as sodium silicate. The synthesis mixture may comprise the alkali or alkaline earth metal cation (M) source in a M/Si molar ratio of 0 to 1.5, such as 0 or 0.05 to 1.0 or 0.8, e.g., 0. Alternatively, the synthesis mixture may be free from alkali or alkaline earth metal cation (M) different than potassium.

The synthesis mixture may also optionally contain at least one source of halide ions (W), which may be selected from the group consisting of fluoride, chloride, bromide or iodide. The source of halide ions (W) may be any compound capable of releasing halide ions in the molecular sieve synthesis mixture. Non-limiting examples of sources of halide ions include hydrogen fluoride, ammonium fluoride (NH₄F), ammonium bifluoride (NH₄HF₂), hydrogen chloride, ammonium chloride, hydrogen bromide, ammonium bromide, hydrogen iodide, and ammonium iodide; salts containing one or several halide ions, such as metal halides, preferably where the metal is sodium, potassium, calcium, magnesium, strontium or barium; ammonium halides; or tetraalkylammonium halides such as tetramethylammonium halides or tetraethylammonium halides. The halide ions (W) may be present in a W/Si molar ratio of 0 to 0.2, such as 0 to 0.1, for instance less than 0.1 or even 0. If fluoride ions are present in the synthesis mixture, said fluoride ions (F) may be present in a F/Si molar ratio of 0 to less than 0.1, such as 0 to 0.05, e.g., 0. Alternatively, the synthesis mixture may be free from a source of halide ions (W), and in particular at least free from a source of fluoride ions.

The synthesis may be performed with our without added nucleating seeds. If nucleating seeds are added to the synthesis mixture, the seeds may be of the same or of a different structure than the aluminosilicate zeolite of the present disclosure, or EMM-63 material, from a previous synthesis, and may suitably present in an amount from about 0.01 ppm by weight to about 10,000 ppm by weight, based on the synthesis mixture, such as from about 100 ppm by weight to about 5,000 ppm by weight of the synthesis mixture.

The synthesis mixture typically comprises water in a H₂O/Si molar ratio of from 1 to 100, such as 15 to 80, for instance 20 to 50, e.g., 30. Depending on the nature of the components in the base mixture, the amount of solvent (e.g., water from the hydroxide solution, and optionally methanol and ethanol from the hydrolysis of silica sources) of the base mixture may be removed such that a desired solvent to Si molar ratio is achieved for the synthesis mixture. Suitable methods for reducing the solvent content may include evaporation under a static or flowing atmosphere such as ambient air, dry nitrogen, dry air, or by spray drying or freeze drying. Water may be added to the resulting mixture to achieve a desired H₂O/Si molar ratio when too much water is removed during the solvent removal process. In some examples, water removal is not necessary when the preparation have sufficient H₂O/Si molar ratio.

Carbon in the form of CH₂ may be present in the various sources of components used to prepare the aluminosilicate zeolite of the present disclosure, e.g., silica source or alumina source, and incorporated into the aluminosilicate zeolite framework as bridging atoms. Nitrogen atoms may be incorporated into the framework of the aluminosilicate zeolite as bridging atoms after the SDA has been removed.

**In** one or more aspects, the synthesis mixture after solvent adjustment (e.g., where the desired water to silica ratio is achieved) may be mixed by a mechanical process such as stirring or high shear blending to assure suitable homogenization of the base mixture, for example, using dual asymmetric centrifugal mixing (e.g., a FlackTek speedmixer) with a mixing speed of 1000 rpm to 3000 rpm (e.g., 2000 rpm).

The synthesis mixture is then subject to crystallization conditions suitable for the aluminosilicate zeolite to form. Crystallization of the aluminosilicate zeolite may be carried out under static or stirred conditions in a suitable reactor vessel, such as for example Teflon^{®} lined or stainless steel autoclaves placed in a convection oven maintained at an appropriate temperature.

The crystallization in step (b) of the method is typically carried out at a temperature of 100°C to 200°C, such as 110°C to 170°C, e.g., 120°C to 150°C, for a time sufficient for crystallization to occur at the temperature used. For instance, at higher temperatures, the crystallization time may be reduced. For instance, the crystallization conditions in step (b) of the method may include heating for a period of from 1 day to 100 days, such as from 1 day to 50 days, for example from 1 day to 30 days, e.g., at least 1 day or at least 5 days up to 15 days or 10 days. The crystallization time can be established by methods known in the art such as by sampling the synthesis mixture at various times and determining the yield and X-ray crystallinity of precipitated solid. Unless indicated otherwise herein, the temperature measured is the temperature of the surrounding environment of the material being heated, for example the temperature of the atmosphere in which the material is heated.

Typically, the aluminosilicate zeolite is formed in solution and can be recovered by standard means, such as by centrifugation or filtration. The separated aluminosilicate zeolite can also be washed, recovered by centrifugation or filtration and dried.

The aluminosilicate zeolite of the present disclosure, when employed either as an adsorbent or as a catalyst in an organic compound conversion process may be dehydrated (e.g. dried) at least partially. This can be done by heating to a temperature in the range of 80°C to 500°C, such as 90°C to 370°C in an atmosphere such as air, nitrogen, etc., and at atmospheric, subatmospheric or superatmospheric pressures for between 30 minutes and 48 hours. Dehydration may also be performed at room temperature merely by placing the molecular sieve in a vacuum, but a longer time is required to obtain a sufficient amount of dehydration.

As a result of the crystallization process, the recovered product contains within its pores at least a portion of the structure directing agent used in the synthesis. The as-synthesized aluminosilicate zeolite recovered from step (c) may thus be subjected to thermal treatment or other treatment to remove part or all of the SDA incorporated into its pores during the synthesis. Thermal treatment (e.g., calcination) of the as-synthesized aluminosilicate zeolite typically exposes the materials to high temperatures sufficient to remove part or all of the SDA, in an atmosphere selected from air, nitrogen, ozone or a mixture thereof in a furnace. While subatmospheric pressure may be employed for the thermal treatment, atmospheric pressure is desired for reasons of convenience. The thermal treatment may be performed at a temperature up to 925°C e.g., 300°C to 700°C or 400°C to 600°C. The temperature measured is the temperature of the surrounding environment of the sample. The thermal treatment (e.g., calcination) may be carried out in a box furnace in dry air, which has been exposed to a drying tube containing drying agents that remove water from the air. The heating is usually calcined for at least 1 minute and generally no longer than 1 or at most a few days. The heating may first be carried out under a nitrogen atmosphere and then the atmosphere may be switched to air and/or ozone.

The aluminosilicate zeolite may also be subjected to an ion-exchange treatment, for example, with aqueous ammonium salts, such as ammonium nitrates, ammonium chlorides, and ammonium acetates, in order to remove remaining alkali metal cations and/or alkaline earth metal cations and to replace them with protons thereby producing the acid form of the molecular sieve. To the extent desired, the original cations of the as-synthesized material, such as alkali metal cations, can be replaced by ion exchange with other cations. Preferred replacing cations can include hydrogen ions, hydrogen precursor, e.g. ammonium ions and mixtures thereof. The ion exchange step may take place after the as-made molecular sieve is dried. The ion-exchange step may take place either before or after a calcination step.

The aluminosilicate zeolite may also be subjected to other treatments such as steaming and/or washing with solvent. Such treatments are well-known to the skilled person and are carried out in order to modify the properties of the molecular sieve as desired.

The aluminosilicate zeolites of the present disclosure, where part or all of the SDA has been removed, may be used as an adsorbent or as a catalyst or support for catalyst in a wide variety of hydrocarbon conversions, e.g., conversion of organic compounds to a converted product. In a sixth embodiment, the present disclosure therefore relates to the use of the aluminosilicate zeolite as described herein as an adsorbent or as a catalyst or support for catalyst in hydrocarbon conversions. The present disclosure also relates to a process of converting an organic compound to a conversion product which comprises contacting the organic compound with the aluminosilicate zeolite as described herein.

The aluminosilicate zeolite of the present disclosure (where part or all of the SDA is removed) may be used as an adsorbent, such as for separating at least one component from a mixture of components in the vapor or liquid phase having differential sorption characteristics with respect to the material. Therefore, at least one component can be partially or substantially totally separated from a mixture of components having differential sorption characteristics with respect to the aluminosilicate zeolite by contacting the mixture with said aluminosilicate zeolite to selectively sorb the one component. For instance, in a process for selectively separating one or more desired components of a feedstock from remaining components of the feedstock, the feedstock may be contacted with a sorbent that comprises the aluminosilicate zeolite of the present disclosure at effective sorption conditions, thereby forming a sorbed product and an effluent product. One or more of the desired components are recovered from either the sorbed product or the effluent product.

The aluminosilicate zeolite of the present disclosure (where part or all of the SDA is removed) may also be used as a catalyst to catalyze a wide variety of organic compound conversion processes. Examples of chemical conversion processes, which are effectively catalyzed by the aluminosilicate zeolite described herein, either alone or in combination with one or more other catalytically active substances including other crystalline catalysts, include those requiring a catalyst with acid activity. Examples of organic conversion processes, which may be catalyzed by the aluminosilicate zeolite described herein include cracking, hydrocracking, isomerization, polymerization, reforming, hydrogenation, dehydrogenation, dewaxing, hydrodewaxing, adsorption, alkylation, transalkylation, dealkylation, hydrodecylization, disproportionation, oligomerization, dehydrocyclization, conversion methanol to olefins, deNOx applications, and combinations thereof. The conversion of hydrocarbon feeds can take place in any convenient mode, for example in fluidized bed, moving bed, or fixed bed reactors depending on the types of process desired.

The aluminosilicate zeolite of the present disclosure may be formulated into product compositions by combination with other materials, such as binders and/or matrix materials that provide additional hardness to the finished product. These other materials can be inert or catalytically active materials.

For instance, it may be desirable to incorporate the aluminosilicate zeolite of the present disclosure with another material that is resistant to the temperatures and other conditions employed during use. Such materials include synthetic or naturally occurring zeolites as well as inorganic materials such as clays, silica and/or metal oxides such as alumina and mixtures thereof. The metal oxides may be either naturally occurring or in the form of gelatinous precipitates or gels including mixtures of silica and metal oxides. Use of a resistant material in conjunction with the aluminosilicate zeolite of the present disclosure, i.e., combined therewith or present during synthesis of the as-made aluminosilicate zeolite, which crystal is active, tends to change the conversion and/or selectivity of the catalyst in certain organic conversion processes. Inactive resistant materials suitably serve as diluents to control the amount of conversion in a given process so that products can be obtained in an economic and orderly manner without employing other means for controlling the rate of reaction. These materials may be incorporated into naturally occurring clays, e.g., bentonite and kaolin, to improve the crush strength of the product under commercial operating conditions. Said inactive resistant materials, i.e., clays, oxides, etc., function as binders for the catalyst. A catalyst having good crush strength can be beneficial because in commercial use, it is desirable to prevent the catalyst from breaking down into powder-like materials.

Naturally occurring clays which may be used include the montmorillonite and kaolin family, which families include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or after being subjected to calcination, acid treatment or chemical modification. Binders useful for compositing with the aluminosilicate zeolite of the present disclosure also include inorganic oxides selected from silica, zirconia, titania, magnesia, beryllia, alumina, yttria, gallium oxide, zinc oxide and mixtures thereof.

In addition to the foregoing materials, the aluminosilicate zeolite of the present disclosure may be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia.

These binder materials are resistant to the temperatures and other conditions, e.g., mechanical attrition, which occur in various hydrocarbon separation processes. Thus the aluminosilicate zeolite of the present disclosure may be used in the form of an extrudate with a binder. They are typically bound by forming a pill, sphere, or extrudate. The extrudate is usually formed by extruding the molecular sieve, optionally in the presence of a binder, and drying and calcining the resulting extrudate. Further treatments such as steaming, and/or ion exchange may be carried out as required. The molecular sieve may optionally be bound with a binder having a surface area of at least 100 m²/g, for instance at least 200 m²/g, optionally at least 300 m²/g.

The relative proportions of aluminosilicate zeolite and inorganic oxide matrix may vary widely, with the aluminosilicate zeolite content ranging from about 1% to about 100% by weight and more usually, particularly when the composite is prepared in the form of extrudates, in the range of about 2 wright percent to about 95 weight percent, optionally from about 20 weight percent to about 90 weight percent of the composite.

The aluminosilicate zeolite of the present disclosure may also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such hydrogenating components may be incorporated in the composition by way of one or more of the following processes: cocrystallization; exchanged into the composition to the extent a Group IIIA element, e.g., aluminum, is in the structure; or intimately physically admixed therewith. Such components can also be impregnated in or onto the aluminosilicate zeolite, for example, by treating the molecular sieve with a hydrogenating metal-containing ion. For instance, in the case of platinum, suitable platinum compounds for this purpose include chloroplatinic acid, platinous chloride and various compounds containing a platinum amine complex. Combinations of metals and methods for their introduction can also be used.

It will be understood by a person skilled in the art that the aluminosilicate zeolite of the present disclosure may contain impurities, such as amorphous materials, unit cells having different topologies (e.g., quartz or molecular sieves of different framework type, that may or may not impact the performance of the resulting catalyst), and/or other impurities (e.g., heavy metals and/or organic hydrocarbons). Typical examples of molecular sieves or zeolites of different framework type co-existing with the aluminosilicate zeolite of the present disclosure are, e.g., ZSM-12, mordenite, cristobalite, quartz, zeolite L, merlinoite, edingtonite, and/or ferrierite. The aluminosilicate zeolite of the present disclosure is preferably substantially free of impurities. The term "substantially free of impurities" (or in the alternative "substantially pure") used herein means the aluminosilicate zeolite contains a minor proportion (less than 50 wt%), preferably less than 20 wt %, more preferably less than 10 wt%, even more preferably less than 5 wt% and most preferably less than 1 wt% (e.g. less than 0.5 wt% or 0.1 wt%), of such impurities, which weight percent (wt%) values are based on the combined weight of impurities and pure aluminosilicate zeolite. The amount of impurities can be appropriately determined by powder XRD, rotating electron diffraction, and/or SEM / TEM (e.g. different crystal morphologies).

The aluminosilicate zeolite described herein are substantially crystalline. As used herein, the term "crystalline" refers to a crystalline solid form of a material, including, but not limited to, a single-component or multiple-component crystal form, e.g., including solvates, hydrates, and a co-crystal. Crystalline can mean having a regularly repeating and/or ordered arrangement of molecules, and possessing a distinguishable crystal lattice. For example, aluminosilicate zeolite can have different water or solvent content. The different crystalline lattices can be identified by solid state characterization methods such as by XRD (e.g., powder XRD). Other characterization methods known to a person of ordinary skill in the relevant art can further help identify the crystalline form as well as help determine stability and solvent/water content. As used herein, the term "substantially crystalline" means a majority (greater than 50 wt%) of the weight of a sample of a material described is crystalline and the remainder of the sample is a non-crystalline form. In one or more aspects, a substantially crystalline sample has at least 95% crystallinity (e.g., 5% of the non-crystalline form), at least 96% crystallinity (e.g., 4% of the non-crystalline form), at least 97% crystallinity (e.g., 3% of the non-crystalline form), at least 98% crystallinity (e.g., about 2% of the non-crystalline form), at least 99% crystallinity (e.g., 1% of the non-crystalline form), and 100% crystallinity (e.g., 0% of the non-crystalline form).

Aspects of the disclosure are described in greater detail by way of specific examples. The following examples are offered for illustrative purposes, and are not intended to limit the disclosure in any manner. Those of skill in the relevant art will readily recognize a variety of parameters can be changed or modified to yield essentially the same results.

### EXAMPLES

The present invention is further illustrated below without limiting the scope thereto.

In these examples, the X-ray diffraction (XRD) patterns of the as-synthesized and as-calcined materials were recorded on an X-Ray Powder Diffractometer (Bruker DaVinci D8 Discovery instrument) in continuous mode using a Cu Kα radiation, Bragg-Bentano geometry with Vantec 500 detector, in the 2*θ* range of 4 degrees to 36 degrees. The interplanar spacings, d-spacings, were calculated in Angstrom units, and the relative intensities of the lines, I/Iₒ is the ratio of the peak intensity to that of the intensity of the strongest line, above background. The intensities are uncorrected for Lorentz and polarization effects. The location of the diffraction peaks in 2-theta, and the relative peak area intensities of the lines, I/I(o), where Io is the intensity of the strongest line, above background, were determined with the MDI Jade peak search algorithm. It should be understood that diffraction data listed as single lines may consist of multiple overlapping lines which under certain conditions, such as differences in crystallographic changes, may appear as resolved or partially resolved lines. Typically, crystallographic changes can include minor changes in unit cell parameters and/or a change in crystal symmetry, without a change in the framework connectivity. These minor effects, including changes in relative intensities, can also occur as a result of differences in cation content, framework composition, nature and degree of pore filling, crystal size and shape, preferred orientation and thermal and/or hydrothermal history.

The scanning electron microscopy (SEM) images of the as-synthesized materials were obtained on a Hitachi 4800 Scanning Electron Microscope. SEM images were used to aid assessment of product purity. The presence of obviously different crystal morphologies in a SEM image can be an indication of impurities in the form of other crystalline materials. Such an approximate analysis can be especially useful in identifying the presence of formation of relatively minor amounts of crystalline impurities which may not be identifiable on product XRD patterns.

The following measurements were conducted on samples that were ion-exchanged and calcined. For each sample subjected to ion-exchange and calcination, the procedure used was as follows: the as-prepared sample was washed two times with a 1M ammonium nitrate solution and then calcined at 500°C for 16 hours.

The overall BET surface area (S_{BET}) of the materials was determined by the BET method as described by S. Brunauer, et al., J. Am. Chem. Soc., 1938, v.60, 309, using nitrogen adsorption-desorption at liquid nitrogen temperature.

The micropore volume (V_{micro}) of the materials can be determined using methods known in the relevant art. For example, the micropore volume of the materials can be measured with nitrogen physisorption, and the data can be analyzed by the t-plot method described in Lippens, B.C. et al., "Studies on pore system in catalysts: V. The t method", J. Catal., v.4, 319 (1965), which describes micropore volume method.

Alpha value is a measure of the cracking activity of a catalyst and is described in U.S. Pat. No. 3,354,078 and in the Journal of Catalysis, v.4, p. 527 (1965); v.6, p. 278 (1966); and v.61, p. 395 (1980). The experimental conditions of the test used herein include a constant temperature of 538°C and a variable flow rate as described in detail in the Journal of Catalysis, v.61, p. 395.

The molar ratios and conditions used for the syntheses of Examples 1-9, as well as the resulting products, are detailed below and summarized in Table 4.

### Example 1: Synthesis with N,2,3,5-tetramethylpyridinium, without seeds

EMM-63 was first observed from a synthesis performed in a 1.5 mL stainless steel reactor tumbled at 120°C for 28 days, from a synthesis mixture having the following composition in terms of molar ratios: Si/Al = 10, H₂O/Si = 30, Q/Si = 0.30, OH/Si = 0.60, K/Si = 0.30, using N,2,3,5-tetramethylpyridinium as structure directing agent (Q) (hydroxide form, 17.5 wt% solution). Ludox LS-30 (30 wt% colloidal silica suspension) was used as the Si source, aluminum hydroxide (82.6 wt% solid Al(OH)₃, remainder being water) was used as the Al source, and KOH (17.5 wt% solution) was used as the K source.

The product was isolated by centrifugation, resuspension in deionized water, and then another centrifugation. This process was repeated three times and then the product was dried at room temperature. The as-synthesized material was then calcined to 600°C within a box furnace via the following procedure. The sample was exposed to flowing nitrogen for two hours at room temperature, followed by a ramp from room temperature to 400°C over a two-hour period while remaining under nitrogen flow. The temperature then remained at 400°C for 15 minutes and then the atmosphere was switched from flowing nitrogen to flowing dried air. The temperature was then ramped from 400°C to 600°C over a 1-hour period. The temperature remained at 600°C for 2 hours and then the box furnace was allowed to cool.

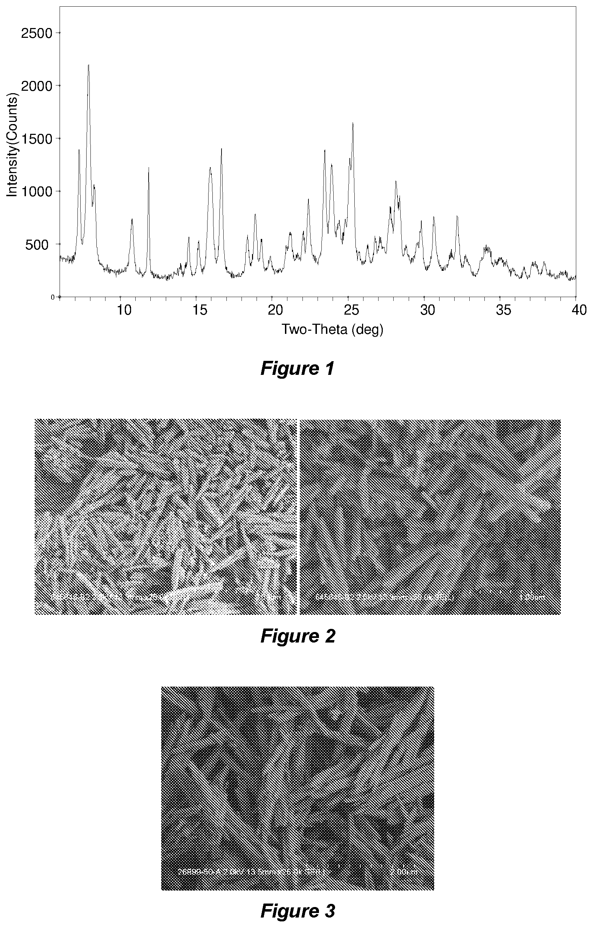

XRD analysis of the as-synthesized and as-calcined materials showed the material to have unique powder XRD patterns which could not be matched with any known zeolite and were designated as pure as-synthesized and as-calcined EMM-63 products. Figure 1 shows the powder XRD of the as-calcined material. Figure 2 shows SEM images of the as-synthesized product.

### Example 2: Medium-scale synthesis with N,2,3,5-tetramethylpyridinium, without seeds

This Example was a medium-scale reproduction of Example 1, synthesized in a 23 mL steel Parr reactor with 1.20 g of SiO₂. After 13 days of heating at 120°C, a pure EMM-63 product was obtained, as identified by its XRD pattern, with a yield of 0.72 g.

### Example 3: Larger-scale synthesis with N,2,3,5-tetramethylpyridinium and seeds

This Example was a larger-scale reproduction of Examples 1 and 2, synthesized in a 125 mL steel Parr reactor with 11.6 g of SiO₂ and in the presence of seeds.

40.9 g of water were mixed with 101.5 g of N,2,3,5-tetramethylpyridinium as structure directing agent (Q) (hydroxide form, 17.5 wt% solution). 76.5 g of Ludox LS-30 (30 wt% colloidal silica suspension), 37.1 g of KOH (17.5 wt%), 3.65 g of aluminum hydroxide (82.6 wt% solid Al(OH)₃, remainder being water), and 0.23 g of seeds (EMM-63 as prepared according to Example 2) were then subsequently added and the resulting mixture was stirred to form the reaction mixture. The reaction mixture was split in two and half of it was filled into a Teflon liner.

After 9 days of heating at 120°C, the product was isolated by centrifugation, resuspension in deionized water, and then another centrifugation. This process was repeated three times and then the product was dried at 90°C. The as-synthesized material was then calcined following the procedure of Example 1.

The resulting product was identified as pure EMM-63, as identified by its XRD pattern, with a yield of 5.3 g. Figure 3 shows a SEM image of the as-synthesized product. Elemental analyses by inductively coupled plasma (ICP) method of the as-calcined product showed the material to have a Si/Al atomic ratio of 7.8 and a K/Al atomic ratio of 0.89.

### Examples 4-5: Synthesis with N,2,3,5-tetramethylpyridinium and seeds at varying temperatures

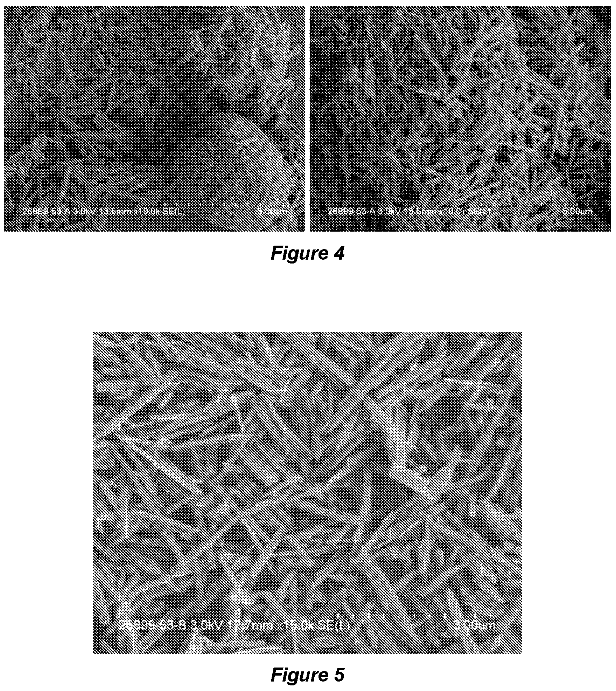

These Examples were conducted in the same conditions as Example 2, but at respectively 135°C and 150°C rather than 120°C and in the presence of 0.23 g of seeds (EMM-63 as prepared according to Example 3), added to the synthesis mixture. After 7 days of heating at respectively 135°C and 150°C, pure EMM-63 products were obtained, as identified by their XRD pattern, with a yield of respectively 0.72 g and 0.79 g. Figures 4 and 5 show SEM images of the respective as-synthesized products.

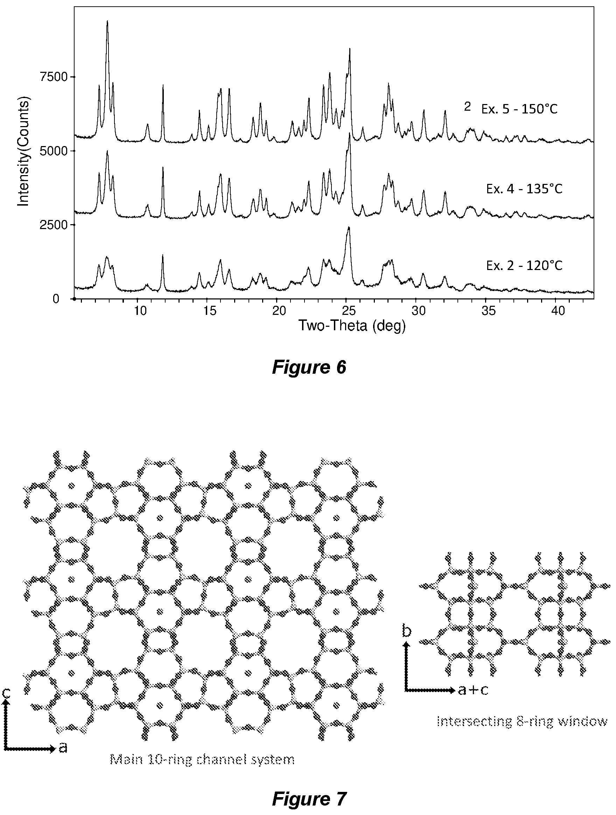

Figure 6 shows the powder XRD of the as-synthesized materials obtained in Examples 4 and 5 at respectively 135°C and 150°C as compared to the powder XRD of the as-synthesized material obtained in Example 2 at 120°C. It illustrates the effect of the synthesis temperature on the breadth of the powder patterns of products obtained at 120°C, 135°C and 150°C respectively: the patterns become sharper as the crystal thicknesses increase with temperature.

Tables 5 and 6 below show the list of peaks and intensities for respectively the as-synthesized and as-calcined EMM-63 products of Example 5. The powder diffraction data of the as-calcined EMM-63 products could be indexed in orthorhombic space group *Pmma* with unit cell dimensions a = 22.1 ± 0.20 Å, b = 7.4 ± 0.20 Å, and c = 11.8 ± 0.20 Å. The framework structure has a 10 x 8 x 8 channel system. The 10-ring pores along the c-axis have dimensions of 5.2 Å x 4.9 Å. The 8-ring pores along the c-axis have dimensions of 4.7 Å x 3.1 Å. A separate 8-ring pore within the x-z plane also has dimensions of 4.7 Å x 3.1 Å. Figure 7 shows the crystal structure of EMM-63 as determined from electron diffraction.

Thermogravimetric analysis (TGA) was performed on the as-synthesized EMM-63 product of Example 5 by heating in air from room temperature to 800°C. Total weight loss was 11.1 wt%. Up to 200°C, there was a 3.8 wt% loss that can be attributed to water. Above 250°C, there was a 7.3 wt% loss that can be attributed to the loss of the organic SDA.

### Examples 6-7: Synthesis with N,2,4,6-tetramethylpyridinium and seeds at varying temperatures

These Examples were conducted in the same conditions as Examples 4-5, at respectively 135°C and 150°C, except N,2,4,6-tetramethylpyridinium was used as structure directing agent (Q) (hydroxide form, 17.5 wt% solution) rather than N,2,3,5-tetramethylpyridinium. After 7 days of heating at respectively 135°C and 150°C, pure EMM-63 products were obtained, as identified by their XRD pattern.

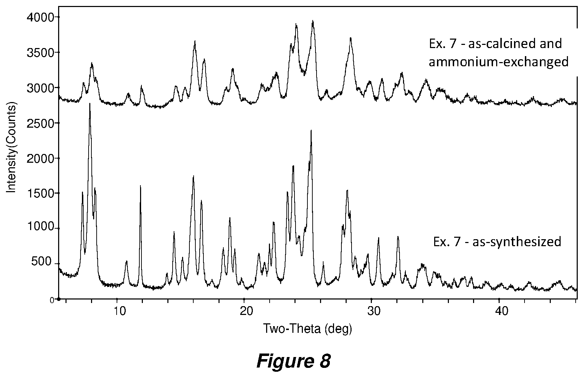

The as-synthesized EMM-63 material of Example 7 was calcined following the procedure defined in Example 1, ammonium ion-exchanged in a batch system with a 1M ammonium nitrate solution, and then calcined again at 500°C for 16 hours to convert the material to an acidic form. Figure 8 compares the powder XRD patterns of the as-synthesized and as-calcined and ammonium-exchanged versions of the EMM-63 product.

### Example 8: Synthesis with N,2,4,6-tetramethylpyridinium and potassium aluminate

This Example was conducted with the same conditions and same mole ratios as Example 6, except that potassium aluminate (11.2 wt% solution) was used as the Al source, rather than aluminum hydroxide. After 7 days of heating at 135°C, a pure EMM-63 product was obtained, as identified by its XRD pattern.

### Example 9: Larger-scale synthesis with N,2,4,6-tetramethylpyridinium and potassium aluminate

This Example was a larger-scale reproduction of Example 8, synthesized in a 125 mL steel Parr reactor. After 7 days of heating at 135°C, a pure EMM-63 product was obtained, as identified by its XRD pattern.

The as-synthesized EMM-63 material was calcined following the procedure defined in Example 1, ammonium ion-exchanged in a batch system with a 1M ammonium nitrate solution, and then calcined again at 500°C for 16 hours to convert the material to an acidic form.

The BET surface area (S_{BET}) of the as-calcined and ammonium exchanged version of the EMM-63 material was 444 m²/g, its micropore volume (V_{micro}) was 0.16 cc/g, and its alpha value was 48. n-hexane, 2,3-dimethylbutane (2,3-DMB), and mesitylene uptakes were determined on ion-exchanged and calcined materials. The material was placed under a nitrogen stream then the hydrocarbon was introduced through a sparger to saturate the nitrogen stream and the hydrocarbon uptake was determined. Each hydrocarbon was adsorbed at a different temperature: n-hexane was adsorbed at 90°C, 2,3-DMB was adsorbed at 120°C, and mesitylene was adsorbed at 100°C. n-hexane uptake was 46.0 mg/g, 2,3-DMB uptake was 47.3 mg/g, and mesitylene uptake was 16.8 mg/g.

**Table 4**

| **Ex.** | **Si Source*** | **Al Source*** | **Q source*** | **K source** | **Seeds** | **T (°C)** | **t (d)** | **Product** |
|---|---|---|---|---|---|---|---|---|
| 1 | Ludox LS-30 | Al(OH)₃ | N,2,3,5-TMPOH | KOH | - | 120 | 28 | EMM-63 |
| 2 | Ludox LS-30 | Al(OH)₃ | N,2,3,5-TMPOH | KOH | - | 120 | 13 | EMM-63 |
| 3 | Ludox LS-30 | Al(OH)₃ | N,2,3,5-TMPOH | KOH | - | 120 | 9 | EMM-63 |
| 4 | Ludox LS-30 | Al(OH)₃ | N,2,3,5-TMPOH | KOH | yes | 135 | 7 | EMM-63 |
| 5 | Ludox LS-30 | Al(OH)₃ | N,2,3,5-TMPOH | KOH | yes | 150 | 7 | EMM-63 |
| 6 | Ludox LS-30 | Al(OH)₃ | N,2,4,6-TMPOH | KOH | yes | 135 | 7 | EMM-63 |
| 7 | Ludox LS-30 | Al(OH)₃ | N,2,4,6-TMPOH | KOH | yes | 150 | 7 | EMM-63 |
| 8 | Ludox LS-30 | KAlO₂ | N,2,4,6-TMPOH | KAlO₂ | yes | 135 | 7 | EMM-63 |
| 9 | Ludox LS-30 | KAlO₂ | N,2,4,6-TMPOH | KAlO₂ | yes | 135 | 7 | EMM-63 |

| | | | | | | | | |
|---|---|---|---|---|---|---|---|---|
| * N,2,3,5-TMPOH = N,2,3,5-tetramethylpyridinium hydroxide, N,2,4,6-TMPOH = N,2,4,6-tetramethylpyridinium hydroxide. | | | | | | | | |

**Table 5**

| **Degree 2-theta** | **d-spacing (Å)** | **Relative intensity [100 x I/(Io)]** |
|---|---|---|
| 7.30 | 12.10 | 24 |
| 7.90 | 11.18 | 100 |
| 8.30 | 10.64 | 28.1 |
| 10.77 | 8.21 | 13.3 |
| 11.87 | 7.45 | 17 |
| 13.94 | 6.35 | 4.2 |
| 14.51 | 6.10 | 15.2 |
| 15.15 | 5.84 | 7.4 |
| 15.84 | 5.59 | 29.1 |
| 16.04 | 5.52 | 29.7 |
| 16.64 | 5.32 | 31.9 |
| 17.47 | 5.07 | 1.6 |
| 18.35 | 4.83 | 14.1 |
| 18.87 | 4.70 | 24.9 |
| 19.28 | 4.60 | 9.4 |
| 19.83 | 4.47 | 3.1 |
| 21.16 | 4.20 | 15.6 |
| 21.61 | 4.11 | 9.5 |
| 22.00 | 4.04 | 8.8 |
| 22.35 | 3.98 | 26.9 |
| 23.41 | 3.80 | 31.1 |
| 23.85 | 3.73 | 59.8 |
| 24.32 | 3.66 | 22.9 |
| 24.73 | 3.60 | 18.7 |
| 25.07 | 3.55 | 43.7 |
| 25.29 | 3.52 | 42.7 |
| 26.23 | 3.40 | 6.6 |
| 27.07 | 3.29 | 5.8 |
| 27.74 | 3.21 | 21.4 |
| 28.08 | 3.18 | 46 |
| 28.36 | 3.14 | 18.9 |
| 28.78 | 3.10 | 14 |
| 29.21 | 3.05 | 4.3 |
| 29.46 | 3.03 | 5 |
| 29.72 | 3.00 | 13.5 |
| 30.57 | 2.92 | 20.2 |
| 31.29 | 2.86 | 1.5 |
| 31.62 | 2.83 | 6.4 |
| 32.11 | 2.79 | 20.5 |
| 32.69 | 2.74 | 6.5 |
| 33.85 | 2.65 | 15.1 |
| 34.18 | 2.62 | 9.7 |
| 34.92 | 2.57 | 8.9 |
| 35.29 | 2.54 | 6.7 |
| 35.78 | 2.51 | 2.4 |
| 36.48 | 2.46 | 3.6 |
| 37.05 | 2.42 | 3.2 |
| 37.28 | 2.41 | 4.3 |
| 37.80 | 2.38 | 5.1 |
| 39.00 | 2.31 | 7.6 |
| 39.14 | 2.30 | 4 |
| 40.20 | 2.24 | 6 |

**Table 6**

| **Degree 2-theta** | **d-spacing (Å)** | **Relative intensity [100 x I/(Io)]** |
|---|---|---|
| 7.27 | 12.15 | 34 |
| 7.88 | 11.21 | 100 |
| 8.27 | 10.69 | 22 |
| 10.73 | 8.24 | 18 |
| 11.85 | 7.47 | 27 |
| 13.90 | 6.37 | 2 |
| 14.48 | 6.11 | 22 |
| 15.10 | 5.86 | 12 |
| 15.84 | 5.59 | 38 |
| 15.99 | 5.54 | 26 |
| 16.60 | 5.34 | 47 |
| 18.30 | 4.84 | 18 |
| 18.83 | 4.71 | 32 |
| 19.24 | 4.61 | 12 |
| 19.80 | 4.48 | 6 |
| 21.12 | 4.20 | 18 |
| 21.54 | 4.12 | 6 |
| 21.96 | 4.04 | 5 |
| 22.31 | 3.98 | 31 |
| 23.37 | 3.80 | 35 |
| 23.83 | 3.73 | 51 |
| 24.30 | 3.66 | 24 |
| 24.69 | 3.60 | 9 |
| 25.02 | 3.56 | 57 |
| 25.27 | 3.52 | 59 |
| 26.22 | 3.40 | 13 |
| 27.15 | 3.28 | 5 |
| 27.72 | 3.22 | 24 |
| 28.06 | 3.18 | 56 |
| 28.34 | 3.15 | 11 |
| 28.72 | 3.11 | 9 |
| 29.16 | 3.06 | 3 |
| 29.57 | 3.02 | 5 |
| 29.68 | 3.01 | 6 |
| 30.57 | 2.92 | 22 |
| 31.73 | 2.82 | 5 |
| 32.07 | 2.79 | 22 |
| 32.62 | 2.74 | 5 |
| 33.64 | 2.66 | 6 |
| 33.88 | 2.64 | 9 |
| 34.23 | 2.62 | 1 |
| 34.80 | 2.58 | 6 |
| 37.23 | 2.41 | 5 |
| 37.81 | 2.38 | 3 |

| **Molar ratios** | **Typical range** | **Preferred range** | **More preferred range** |
|---|---|---|---|
| Si/Al | 1 - 50 | 5 - 25 | 5 - 15 |
| Q/Si | 0.05 - 1.0 | 0.1 - 0.8 | 0.15 - 0.5 |
| K/Si | 0.05 - 1.0 | 0.1 - 1.0 | 0.15 - 0.5 |
| OH/Si | 0.1-1.5 | 0.15 - 1.2 | 0.25 - 0.8 |
| H₂O/Si | 1 - 100 | 15-80 | 20 - 50 |

Embodiment 14: A process of converting an organic compound to a conversion product comprises contacting the organic compound with the aluminosilicate zeolite of any one of embodiments 1 to 10.

## Claims

1. An aluminosilicate zeolite, designated as EMM-63, having, in its as-calcined form, an X-ray diffraction pattern including at least 10 of the peaks selected from Table 1:
**Table 1**
| **degree 2-theta (±0.20)** | **relative intensity [100 x I/(Io)]** |
|---|---|
| 7.27 | 20-40 |
| 7.88 | 60-100 |
| 8.27 | 10-30 |
| 11.85 | 20-40 |
| 14.48 | 10-30 |
| 15.84 | 30-60 |
| 15.99 | 20-40 |
| 16.60 | 30-60 |
| 18.83 | 20-40 |
| 22.31 | 20-40 |
| 23.37 | 20-40 |
| 23.83 | 40-70 |
| 24.30 | 20-40 |
| 25.02 | 40-70 |
| 25.27 | 40-70 |
| 27.72 | 10-30 |
| 28.06 | 40-70 |
| 30.57 | 10-30 |
| 32.07 | 10-30. |

2. The aluminosilicate zeolite of claim 1 having, in its as-calcined form, an X-ray diffraction pattern including at least 12, preferably at least 14, more preferably at least 16, most preferably all of the peaks selected from Table 1.

3. The aluminosilicate zeolite of claim 1 or 2 having a molecular formula of Formula I:
(m)Al₂O₃:SiO₂ (Formula I),
wherein 0.05≤m≤0.17.

4. An aluminosilicate zeolite, designated as EMM-63, having, in its as-synthesized form, an X-ray diffraction pattern including at least 10 of the peaks selected from Table 2:
**Table 2**
| **Degree 2-theta (±0.20)** | **Relative intensity [100 x I/(Io)]** |
|---|---|
| 7.30 | 10-30 |
| 7.90 | 80-100 |
| 8.30 | 20-40 |
| 15.84 | 20-40 |
| 16.04 | 20-40 |
| 16.64 | 20-40 |
| 18.87 | 10-30 |
| 22.35 | 20-40 |
| 23.41 | 20-40 |
| 23.85 | 50-70 |
| 24.32 | 10-30 |
| 25.07 | 30-60 |
| 25.29 | 30-60 |
| 27.74 | 10-30 |
| 28.08 | 30-60 |
| 30.57 | 10-30 |
| 32.11 | 10-30. |

5. The aluminosilicate zeolite of claim 4 having, in its as-synthesized form, an X-ray diffraction pattern including at least 12, preferably at least 14, more preferably all of the peaks selected from Table 2.

6. The aluminosilicate zeolite of claim 4 or 5 having a molecular formula of Formula II:
(q)Q : (m)Al₂O₃: SiO₂ (Formula II),
wherein 0≤q≤0.2, 0.05≤m≤0.17, and Q is selected from the group consisting of N,2,3,5-tetramethylpyridinium, N,2,4,6-tetramethylpyridinium, and mixtures thereof.

7. The aluminosilicate zeolite of any one of claims 1 to 6, having a framework defined by the following connectivities in Table 3 for the tetrahedral (T) atoms in the unit cell, the tetrahedral (T) atoms being connected by bridging atoms:
**Table 3**
| **Topol. Equiv. T-atom^{a}** | **Coordination Sequence N₁ to N₁₂** | | | | | | | | | | | |
|---|---|---|---|---|---|---|---|---|---|---|---|---|
| T1 | 4 | 10 | 20 | 36 | 59 | 84 | 110 | 138 | 180 | 234 | 283 | 327 |
| T2 | 4 | 9 | 18 | 35 | 60 | 87 | 111 | 137 | 176 | 230 | 288 | 337 |
| T3 | 4 | 10 | 20 | 34 | 56 | 84 | 110 | 137 | 173 | 226 | 288 | 338 |
| T4 | 4 | 12 | 23 | 38 | 54 | 78 | 111 | 156 | 196 | 222 | 267 | 318 |
| T5 | 4 | 12 | 24 | 38 | 52 | 76 | 115 | 154 | 192 | 223 | 256 | 323 |
| T6 | 4 | 10 | 21 | 36 | 56 | 80 | 109 | 146 | 180 | 217 | 272 | 331. |
| | | | | | | | | | | | | |
|---|---|---|---|---|---|---|---|---|---|---|---|---|
| ^{a} Topologically equivalent atom positions have the same "T-type" symbol ^{b} Size and number of smallest ring on each angle of the T-atom (M. O'Keeffe et al., *Zeolites,* v.19, 370 (1997)). | | | | | | | | | | | | |

8. The aluminosilicate zeolite of any one of claims 1 to 7, having a structure that has (a) an orthorhombic space group *Pmma* with unit cell dimensions a = 22.1 ± 0.20 Å, b = 7.4 ± 0.20 Å, and c = 11.8 ± 0.20 Å, and (b) a 10 x 8 x 8 channel system, wherein the 10-ring pores along the c-axis have dimensions of 5.2 ± 0.20 Å by 4.9 ± 0.20 Å, the 8-ring pores along the c-axis have dimensions of 4.7 ± 0.20 Å by 3.1 ± 0.20 Å, and a separate 8-ring pore within the x-z plane has dimensions of 4.7 ± 0.20 Å by 3.1 ± 0.20 Å.

9. The aluminosilicate zeolite of any one of claims 1 to 8, having a Si/Al molar ratio of 3 to 10, preferably 5 to 9.

10. A method of making the aluminosilicate zeolite of any one of claims 1 to 9, comprising:
(a) preparing a synthesis mixture comprising water, a source of silica, a source of alumina, a source of potassium, a source of hydroxide ions (OH), and a structure directing agent (Q) selected from the group consisting of N,2,3,5-tetramethylpyridinium, N,2,4,6-tetramethylpyridinium, and mixtures thereof;
(b) heating said synthesis mixture under crystallization conditions including a temperature of from 100 to 200°C for a time sufficient to form crystals of said aluminosilicate zeolite;
(c) recovering at least a portion of the aluminosilicate zeolite from step (b); and
(d) optionally treating the aluminosilicate zeolite recovered in step (c) to remove at least part of the structure directing agent (Q).

11. The method of claim 10, wherein the structure directing agent (Q) is in its hydroxide form.

12. The method of claim 10 or 11, wherein the synthesis mixture has the following composition in terms of molar ratios:
| **Molar ratios** | **Typical range** | **Preferred range** | **More preferred range** |
|---|---|---|---|
| Si/Al | 1 - 50 | 5 - 25 | 5 - 15 |
| Q/Si | 0.05 - 1.0 | 0.1 - 0.8 | 0.15 - 0.5 |
| K/Si | 0.05 - 1.0 | 0.1 - 1.0 | 0.15 - 0.5 |
| OH/Si | 0.1 - 1.5 | 0.15 - 1.2 | 0.25 - 0.8 |
| H₂O/Si | 1 - 100 | 15 - 80 | 20 - 50 |

13. A process of converting an organic compound to a conversion product comprises contacting the organic compound with the aluminosilicate zeolite of any one of claims 1 to 9.

## Patentansprüche

1. Aluminosilikat-Zeolith, bezeichnet als EMM-63, der in seiner kalzinierten Form ein Röntgenbeugungsmuster aufweist, das mindestens 10 der aus Tabelle 1 ausgewählten Peaks enthält:
**Tabelle 1**
| **Grad 2-Theta (±0.20)** | **relative Intensität [100 x I/I₀)** |
|---|---|
| 7,27 | 20-40 |
| 7,88 | 60-100 |
| 8,27 | 10-30 |
| 11,85 | 20-40 |
| 14,48 | 10-30 |
| 15,84 | 30-60 |
| 15,99 | 20-40 |
| 16,60 | 30-60 |
| 18,83 | 20-40 |
| 22,31 | 20-40 |
| 23,37 | 20-40 |
| 23,83 | 40-70 |
| 24,30 | 20-40 |
| 25,02 | 40-70 |
| 25,27 | 40-70 |
| 27,72 | 10-30 |
| 28,06 | 40-70 |
| 30,57 | 10-30 |
| 32,07 | 10-30 |

2. Aluminosilikat-Zeolith nach Anspruch 1, der in seiner kalzinierten Form ein Röntgenbeugungsdiagramm aufweist, das mindestens 12, vorzugsweise mindestens 14, noch bevorzugter mindestens 16, am meisten bevorzugt alle aus Tabelle 1 ausgewählten Peaks enthält.

3. Aluminosilikat-Zeolith nach Anspruch 1 oder 2 mit einer Molekülformel der Formel I:
(m)Al₂O₃ : SiO₂ (Formel I),
wobei 0,05 ≤ m ≤ 0,17.

4. Aluminosilikat-Zeolith, bezeichnet als EMM-63, der in seiner hergestellten Form ein Röntgenbeugungsmuster aufweist, das mindestens 10 der aus Tabelle 2 ausgewählten Peaks enthält:
**Tabelle 2**
| **Grad 2-Theta (±0.20)** | **relative Intensität [100 x I/I₀)** |
|---|---|
| 7,30 | 10-30 |
| 7,90 | 80-100 |
| 8,30 | 20-40 |
| 15,84 | 20-40 |
| 16,04 | 20-40 |
| 16,64 | 20-40 |
| 18,87 | 10-30 |
| 22,35 | 20-40 |
| 23,41 | 20-40 |
| 23,85 | 50-70 |
| 24,32 | 10-30 |
| 25,07 | 30-60 |
| 25,29 | 30-60 |
| 27,74 | 10-30 |
| 28,08 | 30-60 |
| 30,57 | 10-30 |
| 32,11 | 10-30 |

5. Aluminosilikat-Zeolith nach Anspruch 4, der in seiner hergestellten Form ein Röntgenbeugungsmuster aufweist, das mindestens 12, vorzugsweise mindestens 14, besonders bevorzugt alle aus Tabelle 2 ausgewählten Peaks enthält.

6. Aluminosilikat-Zeolith nach Anspruch 4 oder 5 mit einer Molekülformel der Formel II:
(q)Q : (m)Al₂O₃ : SiO₂ (Formel II),
worin 0 ≤ q ≤ 0,2, 0,05 ≤ m ≤ 0,17 und Q ausgewählt ist aus der Gruppe bestehend aus N,2,3,5-Tetramethylpyridinium, N,2,4,6-Tetramethylpyridinium und Mischungen davon.

7. Aluminosilikat-Zeolith nach einem der Ansprüche 1 bis 6 mit einem Gerüst, das durch die folgenden Konnektivitäten in Tabelle 3 für die tetraedrischen (T-)Atome in der Einheitszelle definiert ist, wobei die tetraedrischen (T-)Atome durch verbrückende Atome verbunden sind:
**Tabelle 3**
| Topol. Äquiv. T-Atom^{a} | Koordinierungsreihenfolge N₁ bis N₁₂ | | | | | | | | | | | |
|---|---|---|---|---|---|---|---|---|---|---|---|---|
| T1 | 4 | 10 | 20 | 36 | 59 | 84 | 110 | 138 | 180 | 234 | 283 | 327 |
| T2 | 4 | 9 | 18 | 35 | 60 | 87 | 111 | 137 | 176 | 230 | 288 | 337 |
| T3 | 4 | 10 | 20 | 34 | 56 | 84 | 110 | 137 | 173 | 226 | 288 | 338 |
| T4 | 4 | 12 | 23 | 38 | 54 | 78 | 111 | 156 | 196 | 222 | 267 | 318 |
| T5 | 4 | 12 | 24 | 38 | 52 | 76 | 115 | 154 | 192 | 223 | 256 | 323 |
| T6 | 4 | 10 | 21 | 36 | 56 | 80 | 109 | 146 | 180 | 217 | 272 | 331 |
| | | | | | | | | | | | | |
|---|---|---|---|---|---|---|---|---|---|---|---|---|
| ^{a}Topologisch äquivalente Atompositionen haben das gleiche "T-Typ"-Symbol ^{b}Größe und Anzahl der kleinsten Ringe an jedem Winkel des T-Atoms (M. O'Keeffe et al., Zeolites, v.19, 370 (1997)). | | | | | | | | | | | | |

8. Aluminosilikat-Zeolith nach einem der Ansprüche 1 bis 7 mit einer Struktur, die (a) eine orthorhombische Raumgruppe *Pmma* mit den Einheitszellenabmessungen a = 22,1 ± 0,20 Å, b = 7,4 ± 0,20 Å und c = 11,8 ± 0,20 Å und (b) ein 10 x 8 x 8-Kanalsystem aufweist, wobei die 10-Ring-Poren entlang der c-Achse die Abmessungen 5.2 ± 0,20 Å mal 4,9 ± 0,20 Å haben, die 8-Ring-Poren entlang der c-Achse Abmessungen von 4,7 ± 0,20 Å mal 3,1 ± 0,20 Å haben, und eine separate 8-Ring-Pore innerhalb der x-z-Ebene Abmessungen von 4,7 ± 0,20 Å mal 3,1± 0,20 Å hat.

9. Aluminosilikat-Zeolith nach einem der Ansprüche 1 bis 8 mit einem Si/Al-Molverhältnis von 3 bis 10, vorzugsweise 5 bis 9.

10. Verfahren zur Herstellung des Aluminosilikat-Zeoliths gemäß einem der Ansprüche 1 bis 9, umfassend:
(a) Herstellen einer Synthesemischung, umfassend Wasser, eine Siliciumdioxidquelle, eine Aluminiumoxidquelle, eine Kaliumquelle, eine Hydroxidionen-(OH)-Quelle und ein strukturgebendes Mittel (Q), ausgewählt aus der Gruppe bestehend aus N,2,3,5-Tetramethylpyridinium, N,2,4,6-Tetramethylpyridinium und Mischungen davon;
(b) Erwärmen der Synthesemischung unter Kristallisationsbedingungen, die eine Temperatur von 100 bis 200 °C einschließen, für eine Zeit, die ausreicht, um Kristalle des Aluminosilikat-Zeoliths zu bilden;
(c) Gewinnen mindestens eines Teils des Aluminosilikat-Zeoliths aus Schritt (b); und
(d) gegebenenfalls Behandlung des in Schritt (c) gewonnenen Aluminosilikat-Zeolithss, um zumindest einen Teil des strukturgebenden Mittels (Q) zu entfernen.

11. Verfahren nach Anspruch 10, wobei das strukturgebende Mittel (Q) in seiner Hydroxidform vorliegt.

12. Verfahren nach Anspruch 10 oder 11, wobei die Synthesemischung die folgende Zusammensetzung in Bezug auf die molaren Verhältnisse aufweist:
| **Molare Verhältnisse** | **Typischer Bereich** | **Bevorzugte Reichweite** | **Mehr bevorzugte Reichweite** |
|---|---|---|---|
| Si/Al | 1 - 50 | 5 - 25 | 5 - 15 |
| Q/Si | 0.05 - 1.0 | 0.1 - 0.8 | 0.15 - 0.5 |
| K/Si | 0.05 - 1.0 | 0.1 - 1.0 | 0.15 - 0.5 |
| OH/Si | 0.1 - 1.5 | 0.15 - 1.2 | 0.25 - 0.8 |
| H₂O/Si | 1 - 100 | 15 - 80 | 20 - 50 |

13. Verfahren zur Umwandlung einer organischen Verbindung in ein Umwandlungsprodukt, bei dem die organische Verbindung mit dem Aluminosilikat-Zeoliths gemäß einem der Ansprüche 1 bis 9 in Kontakt gebracht wird.

## Revendications

1. Zéolite d'aluminosilicate, désignée comme EMM-63, ayant, sous sa forme brute de calcination, un diagramme de diffraction des rayons X comprenant au moins 10 des pics choisis dans le Tableau 1 :
**Tableau 1**
| **Degré 2-thêta (±0,20)** | **Intensité relative [100 x I/(Io)]** |
|---|---|
| 7,27 | 20-40 |
| 7,88 | 60-100 |
| 8,27 | 10-30 |
| 11,85 | 20-40 |
| 14,48 | 10-30 |
| 15,84 | 30-60 |
| 15,99 | 20-40 |
| 16,60 | 30-60 |
| 18,83 | 20-40 |
| 22,31 | 20-40 |
| 23,37 | 20-40 |
| 23,83 | 40-70 |
| 24,30 | 20-40 |
| 25,02 | 40-70 |
| 25,27 | 40-70 |
| 27,72 | 10-30 |
| 28,06 | 40-70 |
| 30,57 | 10-30 |
| 32,07 | 10-30. |

2. Zéolite d'aluminosilicate selon la revendication 1, ayant, sous sa forme brute de calcination, un diagramme de diffraction des rayons X comprenant au moins 12, de préférence au moins 14, plus préférablement au moins 16, le plus préférablement tous les pics choisis dans le Tableau 1.

3. Zéolite d'aluminosilicate selon la revendication 1 ou 2 ayant une formule moléculaire de Formule I :
(m)Al₂O₃:SiO₂ (Formule I),
dans laquelle 0,05 ≤ m ≤ 0,17.

4. Zéolite d'aluminosilicate, désignée comme EMM-63, ayant, sous sa forme brute de synthèse, un diagramme de diffraction des rayons X comprenant au moins 10 des pics choisis dans le Tableau 2 :
**Tableau 2**
| **Degré 2-thêta (±0,20)** | **Intensité relative [100 x I/(Io)]** |
|---|---|
| 7,30 | 10-30 |
| 7,90 | 80-100 |
| 8,30 | 20-40 |
| 15,84 | 20-40 |
| 16,04 | 20-40 |
| 16,64 | 20-40 |
| 18,87 | 10-30 |
| 22,35 | 20-40 |
| 23,41 | 20-40 |
| 23,85 | 50-70 |
| 24,32 | 10-30 |
| 25,07 | 30-60 |
| 25,29 | 30-60 |
| 27,74 | 10-30 |
| 28,08 | 30-60 |
| 30,57 | 10-30 |
| 32,11 | 10-30. |

5. Zéolite d'aluminosilicate selon la revendication 4, ayant, sous sa forme brute de synthèse, un diagramme de diffraction des rayons X comprenant au moins 12, de préférence au moins 14, plus préférablement tous les pics choisis dans le Tableau 2.

6. Zéolite d'aluminosilicate selon la revendication 4 ou 5 ayant une formule moléculaire de Formule II :
(q)Q : (m)Al₂O₃: SiO₂ (Formule II),
dans laquelle 0 ≤ q ≤ 0,2, 0,05 ≤ m ≤ 0,17, et Q est choisi dans le groupe constitué par N,2,3,5-tétraméthylpyridinium, N,2,4,6-tétraméthylpyridinium, et des mélanges correspondants.

7. Zéolite d'aluminosilicate selon l'une quelconque des revendications 1 à 6, ayant un squelette défini par les connectivités suivantes dans le Tableau 3 pour les atomes tétraédriques (T) dans la cellule unitaire, les atomes tétraédriques (T) étant reliés par des atomes de pontage :
**Tableau 3**
| **Topol. équiv. atome T^{a}** | **Séquence de coordination N₁ à N₁₂** | | | | | | | | | | | |
|---|---|---|---|---|---|---|---|---|---|---|---|---|
| T1 | 4 | 10 | 20 | 36 | 59 | 84 | 110 | 138 | 180 | 234 | 283 | 327 |
| T2 | 4 | 9 | 18 | 35 | 60 | 87 | 111 | 137 | 176 | 230 | 288 | 337 |
| T3 | 4 | 10 | 20 | 34 | 56 | 84 | 110 | 137 | 173 | 226 | 288 | 338 |
| T4 | 4 | 12 | 23 | 38 | 54 | 78 | 111 | 156 | 196 | 222 | 267 | 318 |
| T5 | 4 | 12 | 24 | 38 | 52 | 76 | 115 | 154 | 192 | 223 | 256 | 323 |
| T6 | 4 | 10 | 21 | 36 | 56 | 80 | 109 | 146 | 180 | 217 | 272 | 331. |
| | | | | | | | | | | | | |
|---|---|---|---|---|---|---|---|---|---|---|---|---|
| ^{a} Les positions atomiques topologiquement équivalentes ont le même symbole « type T » ^{b} Taille et nombre du plus petit cycle sur chaque angle de l'atome T (M. O'Keeffe et al., *Zeolites,* v. 19, 370 (1997)). | | | | | | | | | | | | |

8. Zéolite d'aluminosilicate selon l'une quelconque des revendications 1 à 7, ayant une structure qui a (a) un groupe d'espace orthorhombique *Pmma* avec des dimensions de cellule unitaire a = 22,1 ±0,20 Å, b = 7,4 ±0,20 Å et c = 11,8 ±0,20 Å, et (b) un système de canaux 10 x 8 x 8, dans lequel les pores à 10 cycles le long de l'axe c ont des dimensions de 5,2 ±0,20 Å par 4,9 ±0,20 Å, les pores à 8 cycles le long de l'axe c ont des dimensions de 4,7 ±0,20 Å par 3,1 ±0,20 Å, et un pore à 8 cycles distinct dans le plan x-z a des dimensions de 4,7 ±0,20 Å par 3,1 ±0,20 Å.

9. Zéolite d'aluminosilicate selon l'une quelconque des revendications 1 à 8, ayant un rapport molaire Si/Al de 3 à 10, de préférence de 5 à 9.

10. Procédé de préparation de la zéolite d'aluminosilicate selon l'une quelconque des revendications 1 à 9, comprenant :
(a) la préparation d'un mélange de synthèse comprenant de l'eau, une source de silice, une source d'alumine, une source de potassium, une source d'ions hydroxyde (OH) et un agent de direction de structure (Q) choisi dans le groupe constitué par N,2,3,5-tétraméthylpyridinium, N,2,4,6-tétraméthylpyridinium, et des mélanges correspondants ;
(b) le chauffage dudit mélange de synthèse dans des conditions de cristallisation comprenant une température de 100 à 200 °C pendant une durée suffisante pour former des cristaux de ladite zéolite d'aluminosilicate ;
(c) la récupération d'au moins une partie de la zéolite d'aluminosilicate de l'étape (b) ; et
(d) éventuellement le traitement de la zéolite d'aluminosilicate récupérée dans l'étape (c) pour éliminer au moins une partie de l'agent de direction de structure (Q).

11. Procédé selon la revendication 10, dans lequel l'agent de direction de structure (Q) est sous sa forme d'hydroxyde.

12. Procédé selon la revendication 10 ou 11, dans lequel le mélange de synthèse a la composition suivante en termes de rapports molaires :
| **Rapports molaires** | **Plage typique** | **Plage préférée** | **Plage davantage préférée** |
|---|---|---|---|
| Si/Al | 1 - 50 | 5 - 25 | 5 - 15 |
| Q/Si | 0,05 - 1,0 | 0,1 - 0,8 | 0,15 - 0,5 |
| K/Si | 0,05 - 1,0 | 0,1 - 1,0 | 0,15 - 0,5 |
| OH/Si | 0,1 - 1,5 | 0,15 - 1,2 | 0,25 - 0,8 |
| H₂O/Si | 1 - 100 | 15 - 80 | 20 - 50 |

13. Procédé de conversion d'un composé organique en un produit de conversion comprenant la mise en contact du composé organique avec la zéolite d'aluminosilicate selon l'une quelconque des revendications 1 à 9.
